## Europäisches Patentamt

## European Patent Office

## Office européen des brevets

(11) Numéro de publication: **0 041 445**
**B1**

(12) **FASCICULE DE BREVET EUROPEEN**

(45) Date de publication du fascicule du brevet:
**29.08.84**

(21) Numéro de dépôt: **81400843.9**

(22) Date de dépôt: **26.05.81**

(51) Int. Cl.³: **A 01 F 25/20**

(54) **Fourche à dispositif de découpage pour prélèvement de matière ensilée.**

(30) Priorité: **29.05.80 FR 8011899**

(43) Date de publication de la demande:
**09.12.81 Bulletin 81/49**

(45) Mention de la délivrance du brevet:
**29.08.84 Bulletin 84/35**

(84) Etats contractants désignés:
**AT BE CH DE GB IT LI LU NL SE**

(56) Documents cités:
**GB - A - 1 518 595**

(73) Titulaire: **Etablissements BOTON Frères, Route de Bressuire, F-79320 Moncoutant (FR)**

(72) Inventeur: **Boton, Jacques, Route de Bressuire, F-79320 Moncoutant (FR)**

(74) Mandataire: **Chevallier, Robert Marie Georges, Cabinet BOETTCHER 23, rue La Boétie, F-75008 Paris (FR)**

BUNDESDRUCKEREI BERLIN

## Description

L'invention a pour objet une fourche munie d'un dispositif de découpage périmétrique permettant de prélever un volume déterminé de matière ensilée en laissant un front de taille à coupe nette le long d'un contour géométrique favorable aux prélèvements ultérieurs et à la conservation, entre les prélèvements, de la matière ensilée.

On connaît déjà de nombreux types de fourches munis de moyens de découpage. Par exemple la demande de brevet allemand publiée no 1 582 336 décrit une fourche comprenant un bras à longueur constante monté pivotant par l'une de ses extrémités et muni à son extrémité opposée d'un appareil de coupe à lame perpendiculaire à ce bras. Ce dernier appareil est déplacé le long d'une demi-circonférence de sorte que le front de taille a un profil demi-cylindrique. Les prélèvements effectués successivement laissent subsister entre eux des parties saillantes à flancs incurvés se rencontrant le long d'une arête rectiligne. Cette structure irrégulière de la surface subsistante du silo est peu favorable à une bonne conservation de la matière ensilée. On peut rendre plus régulière et plus proche d'un plan la surface subsistante à condition de faire se chevaucher les prélèvements mais, alors, la fourche n'est pas utilisée au plein de sa capacité.

On connait également du brevet GB-A-1 518 595 une fourche comportant un bras de coupe pivotant télescopique équipé à son extrèmité libre d'un appareil de coupe guidé par un chemin de guidage le long d'un contour sensiblement rectangulaire.

L'invention a pour but principal d'apporter une fourche de conception simple capable de réaliser une coupe le long d'un contour considéré comme plus favorable, tel que par exemple un contour rectangulaire, la fourche de l'invention étant en fait d'une conception telle qu'elle offre, au moment de sa réalisation, le choix entre un grand nombre de contours de coupe selon que l'on préfère adopter, pour diverses raisons, un contour plutôt qu'un autre.

Dans une fourche conforme à l'invention, un arbre est supporté perpendiculairement au plan des dents de la fourche proprement dite, un pantographe est monté autour de cet arbre par une extrémité d'une première branche principale et l'extrémité libre de la seconde branche principale est pourvue d'un appareil de coupe de la matière ensilée. Le point de rencontre et d'articulation l'une sur l'autre des deux branches secondaires du pantographe est situé sur la ligne droite reliant l'arbre et l'appareil de coupe et il est équipé d'un galet; ce galet est engagé avec un chemin de guidage qui constitue un gabarit reproduisant en réduction le contour que doit suivre l'appareil de coupe. Lorsque ce gabarit est composé de trois côtés d'un rectangle réunis par deux angles convenablement arrondis, l'appareil de coupe suit, dans la matière ensilée, un chemin rectangulaire à angles arrondis. On pourrait adopter tout autre contour si on le désirait.

Dans la plupart des cas, l'appareil de coupe est du type à lames agissant dans un plan défini qui doit se confondre avec le contour suivi dans les parties droites de celui-ci et qui doit lui être tangent dans les parties courbes. Pour cette raison, il est préférable de monter l'appareil de coupe à l'extrémité libre de la seconde branche du pantographe en lui ménageant une possibilité d'orientation; un parallélogramme articulé est combiné avec la seconde branche secondaire du l'intermédiaire d'un support d'orientation articulé sur l'extrémité de la deuxième branche principale de pantographe et portant l'appareil de coupe; le parallélogramme comprend un triangle de renvoi ayant deux points d'articulation qui font partie du parallélogramme et un troisième point d'articulation; un levier de renvoi est articulé d'une part sur ce troisième point et d'autre part sur le support de l'appareil de coupe.

Le déplacement de l'appareil de coupe le long du contour de découpe se fait par pivotement du pantographe autour de l'axe géométrique de l'arbre sur lequel il est monté; ce mouvement peut être exécuté par entraînement en rotation de l'arbre lui-même. Il est préférable cependant de laisser le pantographe libre en rotation autour de cet arbre et de prévoir un moyen d'entraînement tel qu'une chaîne entraînée en déplacement parallèlement au chemin de guidage, cette chaîne étant fixée à une plaquette sur laquelle est monté le galet d'articulation des deux branches secondaires du pantographe.

Dans certaines circonstances, la matière ensilée est extrêmement compacte et elle oppose une forte résistance à l'avance de l'appareil de coupe. Afin de ne pas être conduit à donner des dimensions très importantes aux pièces composant le pantographe, et à celles du parallélogramme quand celui-ci est utilisé, il est avantageux de reporter une fraction des efforts de déplacement sur un bras de soutien à longueur variable calé par une extrémité sur l'arbre de pivotement du pantographe et réuni par son extrémité opposée à l'appareil de coupe au même point que la seconde branche principale du pantographe. Dans ce cas, au lieu de déplacer le pantographe en agissant directement sur lui, il est préférable d'exercer directement sur le bras de soutien le couple nécessaire à son pivotement et de déplacer le pantographe par l'intermédiaire de ce bras.

Dans un mode de réalisation de l'invention comprenant un bras de soutien, les deux branches secondaires du pantographe sont articulées autour d'un axe qui s'étend dans une rainure ménagée en sens radial dans la face supérieure de ce bras et deux galets de guidage engagés tous deux dans le chemin de guidage du gabarit sont montés de part et d'autre de cet axe, de sorte que le déplacement du pantographe se fait par l'intermédiaire du bras de soutien.

Pour bien faire comprendre l'invention, on donnera maintenant une description de deux exemples de réalisation. On se reportera aux dessins annexés dans lesquels:

— la fig. 1 est une vue de dessus simplifiée d'une fourche montrant un mécanisme d'entraînement d'un appareil de coupe comprenant un pantographe combiné à un parallélogramme d'orientation de l'appareil de coupe,

— la fig. 2 est une vue de dessus simplifiée analogue à la précédente montrant un mécanisme d'entraînement comprenant, en plus d'un pantographe et d'un parallélogramme, un bras de soutien par lequel l'ensemble est déplacé le long du contour de coupe, certaines parties étant supposées arrachées pour laisser voir les pièces inférieures,

— la fig. 3 est une vue de dessus montrant les engrenages pour le mouvement de pivotement du bras de soutien,

— la fig. 4 est une vue de côté en coupe brisée selon IV-IV de la fig. 2,

— la fig. 5 est une vue de détail en coupe selon V-V de la fig. 2.

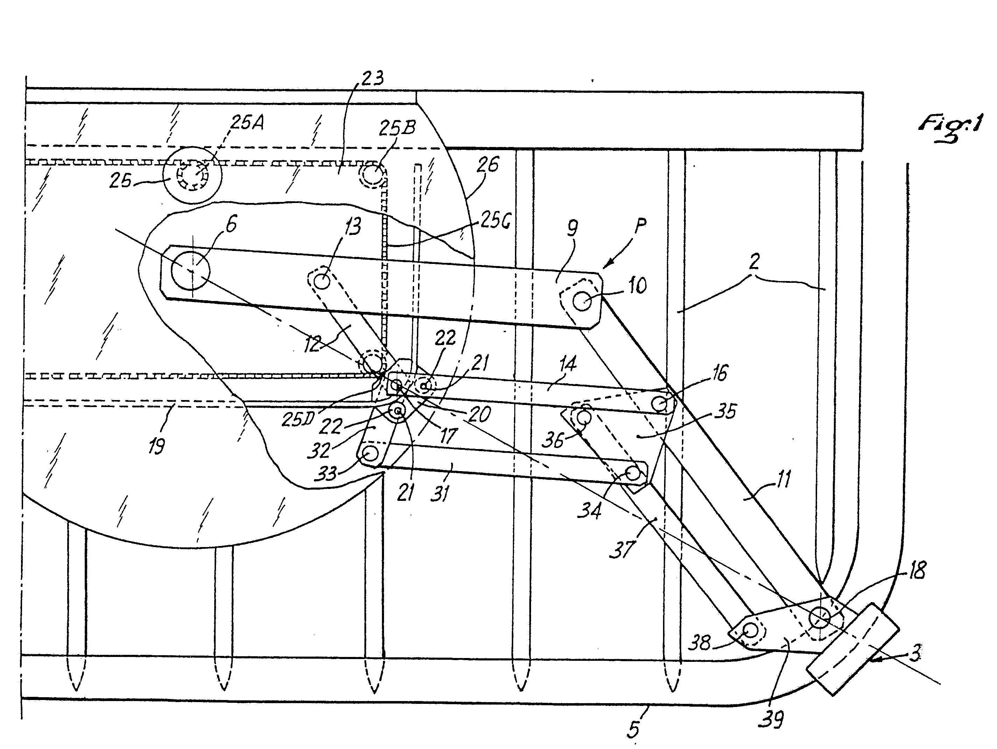

Une fourche pour prélèvement de matière ensilée comprend un bâti vertical 1 à la partie inférieure duquel s'étendent des dents parallèles 2 destinées à être enfoncées totalement, dans un plan horizontal, dans la matière ensilée. Un appareil de coupe 3 est supporté par la partie supérieure du bâti 1; cet appareil 3 comprend un organe de coupe 4 qui s'étend verticalement jusqu'au voisinage des pointes des dents 2. Le rôle de cet organe de coupe 4 est de trancher dans la matière ensilée le long d'un contour 5 indiqué en trait mixte sur la fig. 1 de façon à découper un bloc de matière supporté par les dents 2. Le contour 5 suit un tracé qui contient les dents 2. De préférence, pour que la fourche travaille toujours au maximum de sa capacité, et pour que la surface subsistante qui devient apparente du silo reste nette et favorable à une bonne conservation apparente, le bloc prélevé doit être parallélépipédique et le contour 5 doit, en vue de dessus, être celui de trois côtés adjacents d'un rectangle.

L'appareil de coupe 3 et son organe de coupe 4 sont supportés et déplacés à partir de la partie supérieure du bâti 1. Il existe nécessairement une relation entre le type utilisé de l'organe de coupe 4 et le guidage en déplacement de l'appareil 3 le long du contour 5. Si l'on suppose que l'organe de coupe 4 est d'un type apte à découper la matière ensilée sans avoir à être orienté d'une manière particulière, l'invention se présente alors sous son aspect le plus général.

Sous cet aspect général, l'invention comprend un arbre 6 qui est disposé parpendiculairement au plan des dents 2 et qui est supporté et guidé en rotation grâce à un palier 7 qui est lui-même soutenu par des éléments appropriés 8 qui font partie de la partie supérieure du bâti 1. Un pantographe désigné par la référence générale P est monté sur l'arbre 6 à partir duquel il s'étend jusqu'à l'appareil de coupe 3. Plus précisément le pantographe P a une première branche principale 9 montée libre en rotation par une extrémité autour de l'arbre 6 et articulée en 10 par son extrémité opposée avec une seconde branche principale 11; l'extrémité opposée de celle-ci sert à porter l'appareil de coupe 3. Le pantographe P comprend 12, 14 sont articulées l'une avec l'autre en 17 par une de leurs extrémités. L'arbre 6, le point d'articulation 17 des deux branches secondaires 12, 14 sont situés sur une même ligne droite qui passe aussi par le point 18 où sont réunis la seconde branche principale 11 et l'appareil de coupe 3. Selon l'invention, l'axe de l'articulation 17 est pourvu d'un galet au moins qui est engagé avec un chemin de guidage 19. En pratique, pour un meilleur guidage du pantographe, il est préférable d'associer à l'axe 17 une plaquette 20 qui porte deux axes espacés 21 munis chacun d'un galet 22. Les deux galets 22 sont donc écartés et sont disposés par rapport à l'axe 17 de l'autre côté du chemin de guidage 19 avec lequel ils sont engagés tous les trois. Le chemin de guidage 19 est un gabarit qui reproduit en réduction le tracé du contour 5 que doit suivre l'appareil de coupe 3. Une tôle 23 est fixée au bâti 1 pour être tenue parallèlement au-dessus du pantographe P; sur sa face inférieure elle présente un fer 24 qui constitue le chemin de guidage 19. Les angles de côtés perpendiculaires de ce dernier sont arrondis pour permettre une circulation facile des galets 22 et de l'axe 17.

Le déplacement du pantographe P autour de l'arbre 6 se fait grâce à un moteur 25 supporté par des éléments du bâti 1 avec son axe perpendiculaire au plan des dents 2 et avec son arbre saillant vers le bas où il est pourvu d'un pignon denté 25A.

La tôle 23 qui sert à porter le chemin de guidage 19 porte aussi quatre pignons 25B disposés à l'intérieur du chemin de guidage 19 aux quatre angles d'un rectangle. Ces pignons servent à guider une chaîne 25C à laquelle est fixée la plaquette 20 par un côté 25D intérieurement au chemin de guidage 19. Cette chaîne 25C est entraînée en déplacement alternativement dans un sens et dans l'autre par le pignon 25A du moteur 25. Pendant son déplacement, la chaîne 25C passe autour des pignons 25B, sa fixation au côté 25D est faite latéralement de façon que ses mouvements ne soient pas entravés autour des pignons 25B.

Le mouvement de la chaîne 25C est accompagné du déplacement de la plaquette 20 et il en résulte un mouvement de pivotement de l'axe 17 autour de l'arbre 6 guidé par le chemin de guidage 19. De ce fait, le pantographe P peut être déplacé autour de l'arbre 6 d'un angle de 180° dans un sens ou dans l'autre. Pendant ce déplacement, l'appareil de coupe 3 reproduit, à plus grande échelle en suivant le contour 5, le profil du chemin de guidage 19. On voit que la conception de la fourche conforme à l'invention permet de choisir aisément le contour que l'on veut faire suivre à l'appareil de coupe 3.

En pratique, l'appareil de coupe 3 utilisé dans le présent exemple de réalisation comprend un organe de coupe 4 composé de deux lames 4A, 4B accolées et mûes en même temps longitudinalement dans des sens opposés grâce à deux excentriques opposés 29, 30 entraînés en rotation par un moteur 31. Les lames 4A, 4B ne coupent que dans le sens de leur propre plan qui doit être confondu avec le contour 5 dans les parties droites de celui-ci ou lui être tangent dans les parties incurvées. Il est donc nécessaire d'orienter comme il convient l'appareil de coupe 3 pendant le mouvement du pantographe P.

A cet effet, selon un aspect plus particulier de l'invention, un parallélogramme d'orientation est combiné au pantographe P. Ce parallélogramme comprend une première barre principale qui est la seconde branche secondaire 14 du pantographe, une seconde barre principale 31 qui est parallèle et égale à la première barre principale, une première barre secondaire 32 articulée par une première extrémité en 17 avec les deux branches secondaires 12, 14 du pantographe P et articulée en 33 avec la seconde barre principale 31, un côté compris entre deux points d'articulation 16 et 34 d'un triangle de renvoi 35 ayant un troisième point d'articulation 36. Dans ce triangle de renvoi 35 le point d'articulation 16 fait partie du pantographe P et du parallélogramme, le point d'articulation 34 réunit le triangle 35 à la seconde barre principale 31, le troisième point d'articulation 36 relie le triangle 35 à une extrémité d'un levier de renvoi 37 dont l'extrémité opposée est articulée en 38 avec un support 39 qui porte l'appareil de coupe 3 et qui est articulé en 18 à l'extrémité de la seconde branche principale 11 du pantographe P. En effet, dans l'hypothèse envisagée ici d'un appareil de coupe nécessitant d'être orienté pendant la coupe, on ne peut pas monter cet appareil à l'extrémité du pantographe en l'immobilisant à une position fixe.

Grâce à l'action combinée du pantographe P et du parallélogramme qui lui est combiné, pendant le déplacement qui se fait sous l'effet d'un pignon 28 monté sur la première branche principale 9, l'appareil de coupe 3 suit le contour 5 en prenant constamment l'orientation convenable comme il est illustré par la fig. 1 qui montre l'appareil 3 dans un angle arrondi du contour 5.

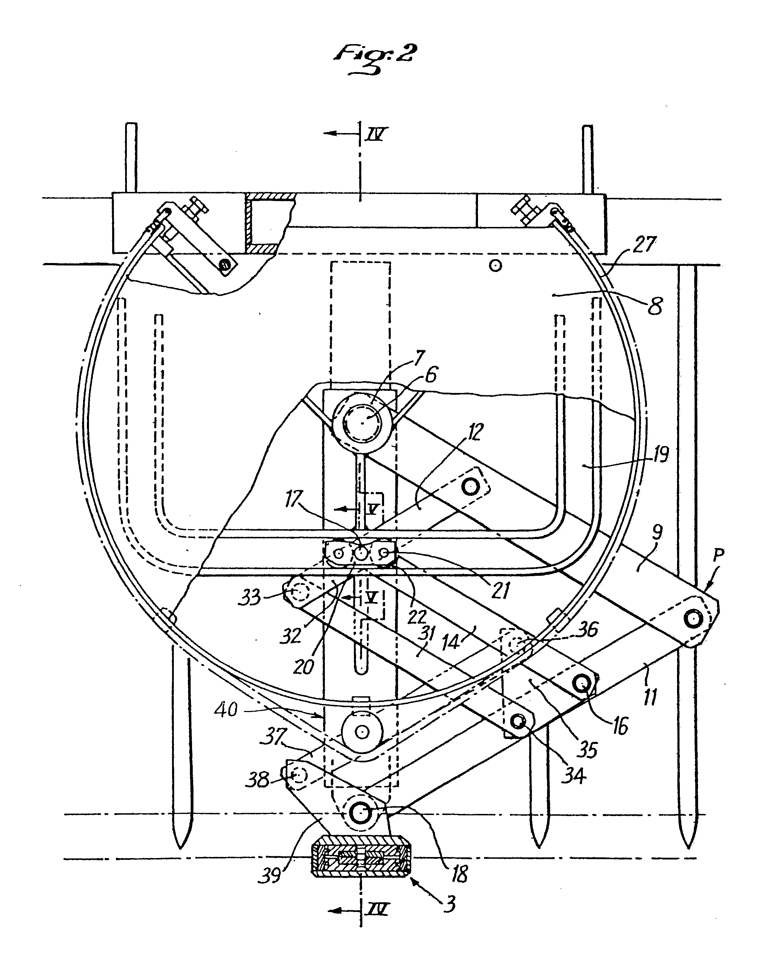

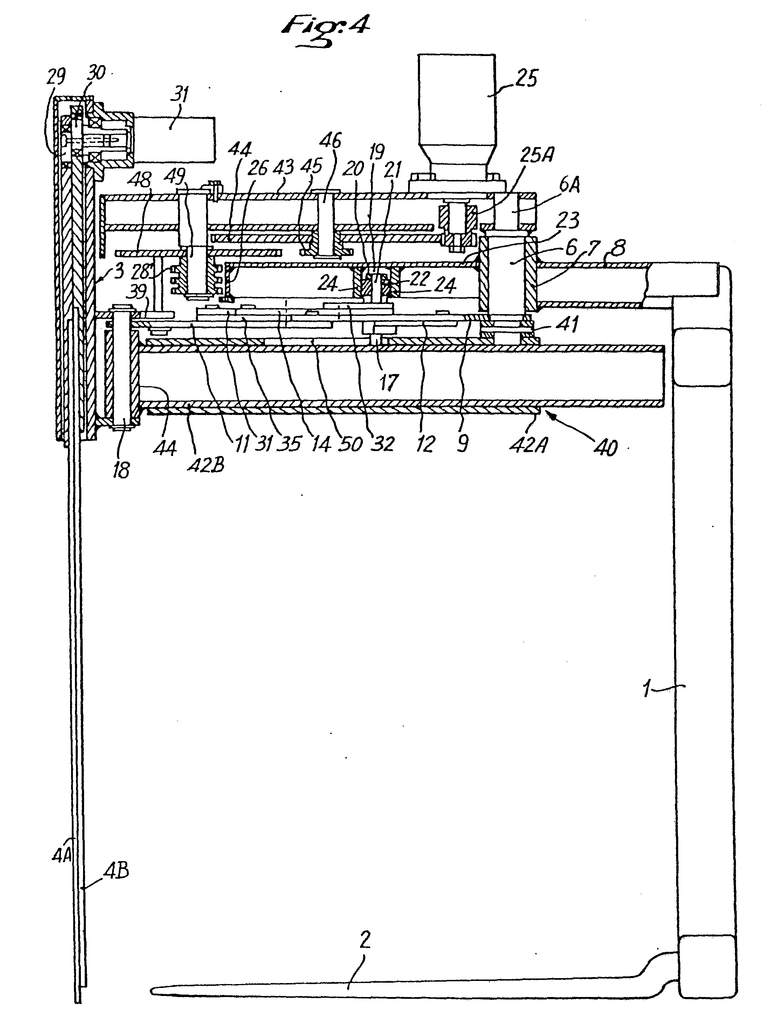

Quand on peut craindre que la matière ensilée oppose une forte résistance à l'avance de l'appareil de coupe 3, il est judicieux, selon l'invention, de renforcer le pantographe P à l'aide d'un bras de soutien désigné par la référence générale 40 sur les fig. 2, 3 et 4. Ce bras de soutien 40 s'étend radialement entre l'arbre 6 sur lequel il est calé en rotation par une goupille 41 et l'extrémité de la seconde branche principale 11 du pantographe P. Comme on le voit mieux sur la fig. 4, le bras de soutien 40 est du type télescopique ou à longueur variable. Il comprend une première partie 42A qui est fixée à l'arbre 6 en dessous du pantographe P et qui sert de moyen de guidage à une seconde partie 42B montée libre en coulissement, en sens longitudinal, dans la première partie 42A. Cette seconde partie 42B est pourvue à une extrémité d'une douille 44 qui est conçue pour contenir et guider en rotation l'axe 18 d'articulation autour duquel sont montés libres le support 39 portant l'appareil de coupe 3 et la seconde branche principale 11 du pantographe P.

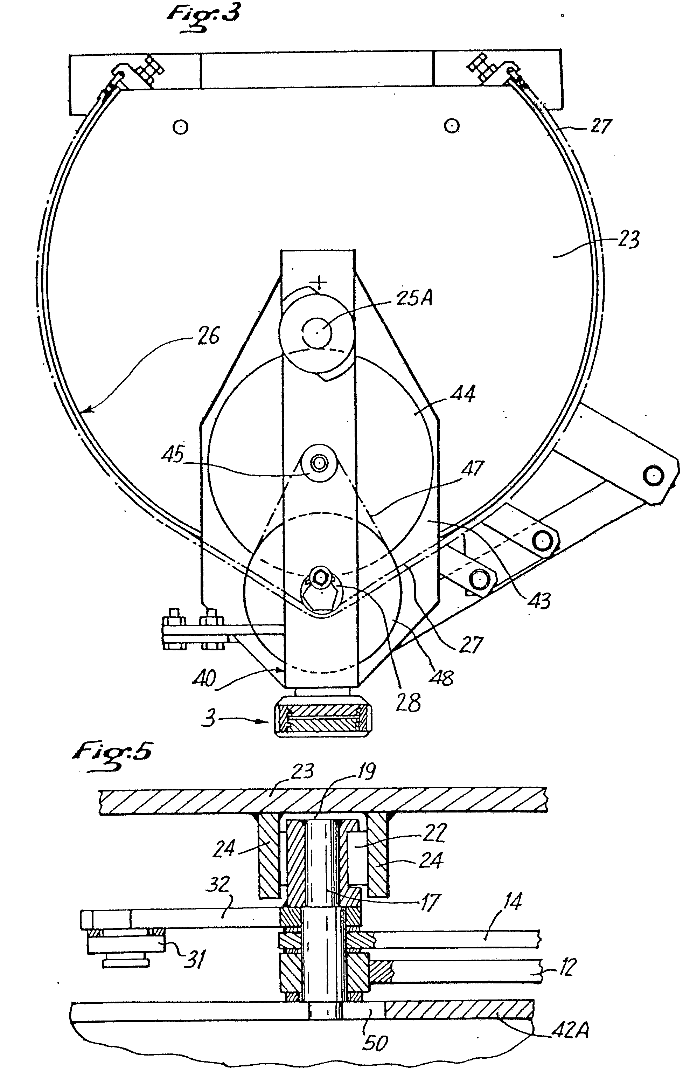

Il est clair que l'on peut donner facilement au bras de soutien 40 les dimensions qui sont nécessaires pour supporter les efforts rencontrés pendant la coupe. Pour cette raison, il est préférable de fournir à ce bras 40 le couple de déplacement de l'appareil de coupe 3. A cet effet, comme on peut le voir sur les fig. 2 à 4, la tôle 23 qui sert à porter le chemin de guidage 19 s'étend au-delà de ce dernier et elle est terminée par un bord circulaire denté 26, dont le centre se trouve sur l'axe géométrique de l'arbre 6. Dans l'exemple de réalisation décrit ici, le bord circulaire de la tôle 23 est muni d'une courte jupe contre la face extérieure de laquelle est plaquée une chaîne 27 qui est tenue tendue par ses extrémités opposées. En fait, pour un meilleur fonctionnement, la chaîne 27 passe autour du pignon denté 28 qui lui est associé. Le moteur 25 est monté sur un support de transmission 43 sur lequel se trouve le pignon denté 28 qui engrène avec la chaîne 27 (non représentée sur la fig. 4). Le couple fourni par le pignon 25A du moteur 25 est transmis à une roue dentée 44 puis à un pignon 45 solidaire de cette dernière, en rotation, montés autour d'un axe 46 fixé au support de transmission 43. Une chaîne 47 (représentée seulement sur la fig. 3) transmet la rotation à une roue dentée 48 calée en rotation avec le pignon denté 28 et montée avec lui sur un axe 49 porté par le support de transmission 43. Dans le cas envisagé, les support 43 est rendu solidaire en rotation de l'arbre 6 par sa fixation, par soudure, sur une partie supérieure 6A de cet arbre comme on peut le voir sur la fig. 4. De cette façon, le moteur 25 fait tourner le support de transmission 43, l'arbre 6 et le bras 40. Dans ces conditions, les pièces du pantographe P et du parallélogramme peuvent être réduites en section puisqu'elles n'ont plus qu'à assurer les déplacements de la partie 42B du bras 40 et l'orientation de l'appareil de coupe 3.

L'entraînement en pivotement du pantographe P autour de l'arbre 6 se fait par l'intermédiaire du bras de soutien 40. La première branche principale 9 est montée libre autour de l'arbre 6 et il est prévu dans la partie 42A du bras 40 une rainure radiale 50 dans laquelle est engagé par sa partie extrême inférieure l'axe 17 d'articulation de la première branche secondaire 12 et de la seconde branche secondaire 14 du pantographe P.

Dans cet exemple, les pièces qui servaient à l'entraînement direct du pantographe P, c'est-à-dire les pignons dentés 25B, la chaîne 25C fixée en 25D à la plaquette 20, ne sont plus utilisées, bien entendu. De plus, ainsi qu'on peut le voir sur les fig. 2 à 4, la tôle 23 est pourvue sur sa face inférieure de deux fers 24 parallèles et espacés comme il convient pour limiter entre eux le chemin de guidage 19. Sur la plaquette 20, les deux galets 22 sont disposés de part et d'autre de l'axe 17 et sont engagés tous les deux dans le chemin de guidage 19 entre les fers 24.

De cette façon, pendant la rotation de l'arbre 6, l'appareil de coupe 3 est déplacé directement par le bras de soutien 40; la longueur de celui-ci est modifiée par le pantographe P et l'orientation de l'appareil de coupe 3 est modifiée par le parallélogramme 31 à 35 de sorte que la matière ensilée est découpée le long du contour 5 qui est un agrandissement homothétique du chemin de guidage 19.

Il est à remarquer que l'invention permet de choisir et de modifier facilement le contour réel de découpage 5 en adoptant ou en changeant le chemin de guidage 19 dont la transformation est facile à réaliser. Cependant, il est préférable dans l'esprit de l'invention de prendre un contour 5 rectangulaire dans l'ensemble, c'est-à-dire comprenant trois côtés d'un rectangle avec des angles fortement arrondis; il est plus avantageux encore d'adopter un contour en U ouvert, c'est-à-dire des branches latérales s'écartant l'une de l'autre vers l'extérieur à partir du côté avant qui suit la limite des dents 2. Cet évasement en dépouille facilite le retrait de la partie découpée hors de la matière ensilée; l'évasement peut avoir une importance s'exprimant par une inclinaison de 3 à 15%, de préférence 10%, vers l'extérieur par rapport à une perpendiculaire au côté avant de la coupe. L'expression utilisée ici »rectangulaire dans l'ensemble« désigne ce contour évasé aussi bien qu'un contour strictement rectangulaire.

**Revendications**

1. Fourche pour prélèvement de matière ensilée comprenant un bâti (1) muni de dents parallèles (2) se terminant le long d'un contour (5) rectangulaire dans l'ensemble, un arbre (6) supporté perpendiculairement au plan des dents (2), un appareil de coupe (3) supporté à partir de l'arbre (6) et ayant un organe de coupe (4) déplaçable le long du contour (5), un chemin de guidage (19) reproduisant la forme du contour (5) et des moyens de déplacement de l'appareil de coupe (3) le long du contour (5) autour de l'axe géométrique de l'arbre (6), caractérisée en ce que l'appareil de coupe (3) est supporté par un pantographe P mobile dans un plan parallèle au plan des dents (2) et ayant d'une part une première branche principale (9) montée par une extrémité autour de l'arbre (6) et une seconde branche principale (11) à l'extrémité libre de laquelle est monté l'appareil de coupe (3), d'autre part une première branche secondaire (12) et une seconde branche secondaire (14) articulées ensemble autour d'un axe d'articulation (17) aligné avec l'arbre (6) et l'appareil de coupe (3), ledit axe étant pourvu d'un galet au moins qui est engagé avec le chemin de guidage (19) et en ce que le chemin de guidage reproduit en réduction le contour (5).

2. Fourche selon la revendication 1, caractérisée en ce qu'elle comporte un organe de coupe (4) du type à lame agissant dans son plan, et un parallélogramme d'orientation combiné avec le pantographe P et complété par un levier de renvoi (37), l'appareil de coupe (3) étant monté à l'extrémité de la seconde branche principale (11) à l'aide d'un support d'orientation (39) auquel il est fixé et qui est articulé en (18) à l'extrémité de cette seconde branche (11), le levier de renvoi (37) étant aussi articulé par une extrémité sur ce support d'orientation (39) pour en commander l'orientation.

3. Fourche selon la revendication 2, caractérisée en ce que le parallélogramme comprend comme première barre principale la seconde branche secondaire (14) du pantographe P, une seconde barre principale (31) parallèle à cette branche secondaire (14), une première barre secondaire (32) articulée autour de l'axe (17) d'articulation des deux branches secondaires (12, 14) du pantographe P et avec la seconde barre principale (31), un côté compris entre deux points d'articulation (16, 34) d'un triangle de renvoi (35) ayant un troisième point d'articulation (36) où est articulée l'autre extrémité du levier de renvoi (37), lesdits deux points d'articulation (16, 34) étant respectivement celui de la seconde branche principale (11) avec la seconde branche secondaire (14) du pantographe P et celui du triangle de renvoi (35) avec la seconde barre principale (31) du parallélogramme.

4. Fourche selon l'une quelconque des revendications 1 à 3, caractérisé en ce qu'elle comprend un moteur de déplacement (25) supporté par le bâti (1) et pourvu directement sur son arbre d'un pignon denté (25A), une plaque supportée par le bâti (1) et munie de pignons dentés (25B) libres en rotation pour guider une chaîne (25C) qui engrène avec ces pignons (25B) et avec le pignon (25A) du moteur (25) et une plaquette (20) fixée à ladite chaîne et portant l'axe d'articulation (17) pourvu d'un galet engagé avec le chemin de guidage (19).

5. Fourche selon l'une quelconque des revendications 1 à 3, caractérisé en ce qu'elle comprend un bras à longueur variable s'étendant sous le pantographe P entre l'arbre (6) et l'appareil de coupe (3), en ce que ce bras est un bras de soutien (40) du pantographe P, ce bras étant monté par une extrémité autour de l'arbre (6) et réuni par son extrémité opposée à l'extrémité de la seconde branche principale (11) du pantographe P sur laquelle est monté l'appareil de coupe (3), et en ce que les moyens de déplacement agissent sur ce bras de soutien (40) pour déplacer l'appareil de coupe (3) le long du contour (5).

6. Fourche selon la revendication 3, caractérisé en ce qu'elle comprend un bras à longueur variable s'étendant entre l'arbre (6) et l'appareil de coupe (3), et en ce que ce bras (40) présente à son extrémité libre une douille (44) dans laquelle est guidé l'axe (18) d'articulation du support d'orientation (39) portant l'appareil de coupe (3) et l'extrémité de la seconde branche principale (11) du pantographe P.

7. Fourche selon la revendication 6, caractérisé en ce qu'elle comporte un support de transmission (43), qui est calé en rotation sur l'arbre (6), s'étend au-dessus du pantographe P et porte un moteur (25) et un train d'engrenages de transmission de mouvement se terminant par un pignon (28), et en ce qu'elle comporte en outre une plaque supportée par le bâti (1) avec un bord circulaire denté (26) centré sur l'axe de l'arbre (6), le dernier pignon (28) du train engrenant avec ce bord denté (26).

8. Fourche selon la revendication 7, caractérisée en ce qu'une tôle (23) supportée par le bâti (1) constitue la plaque à bord circulaire denté (26) et présente sur sa face inférieure le chemin de guidage (19) défini par deux fers parallèles espacés (24).

9. Fourche selon la revendication 8, caractérisée en ce que le bras (40) comprend une première partie (42A) calée en rotation sur l'arbre (6) et une seconde partie (42B) montée coulissante dans la première partie (42A) et en ce qu'une rainure longitudinale (50) est prévue sur le dessus de la première partie (42A) du bras pour recevoir la partie extrême inférieure de l'axe d'articulation (17) de la première branche secondaire (12) et de la seconde branche secondaire (14) du pantographe P.

10. Fourche pour prélèvement de matière ensilée comprenant des dents parallèles (2) se terminant le long d'un contour (5) rectangulaire dans l'ensemble, un arbre (6) supporté perpendiculairement au plan des dents (2), un appareil de coupe (3) ayant un organe de coupe (4) déplaçable le long du contour (5) supporté par un bras de soutien (40) à longueur variable s'étendant parallélement au plan des dents (2) entre l'arbre (6) et un support d'orientation (39) auquel est attaché l'appareil de coupe (3), un chemin de guidage (19) reproduisant la forme du contour (5) et des moyens de déplacement de ce dernier autour de l'arbre (6), caractérisée en ce qu'un pantographe P est monté par une extrémité sur l'arbre (6) et articulé par son extrémité opposée sur le support d'orientation (39), ce pantographe P étant entraîné en rotation par le bras (40) et commandé dans ses mouvements pendant sa rotation par au moins un galet engagé dans le chemin de guidage (19), en ce que le chemin de guidage reproduit en réduction le contour (5), et en ce qu'un parallélogramme articulé est combiné avec le pantographe P et se termine par un levier de renvoi (37) articulé en (38) sur le support d'orientation (39) pour orienter l'appareil de coupe (3) pendant son déplacement.

11. Fourche selon l'une quelconque des revendications 1 à 10, caractérisée en ce que l'organe de coupe (4) est composé de deux lames (4A, 4B) accolées et mûes longitudinalement en sens opposés pendant le fonctionnement.

12. Fourche selon la revendication 11, caractérisée en ce que les deux lames (4A, 4B) sont associées chacune respectivement à deux excentriques opposés (29, 30) entraînés en rotation par un moteur (31).

**Patentansprüche**

1. Gabelgerät zur Gutentnahme aus einem Silo, mit einem Rahmen (1), der mit parallelen Zähnen (2) versehen ist, welche längs einer rechtwinklig in der Anordnung verlaufenden Kontur (5) enden, mit einer senkrecht zur Ebene der Zähne (2) angeordneten Achse (6), einer ausgehend von der Achse (6) gehaltenen Schneidvorrichtung (3), die ein Schneidelement (4) aufweist, welches längs der Kontur (5) verschiebbar ist, einer Führungsbahn (19), welche die Form der Kontur (5) reproduziert und einer Einrichtung zur Verschiebung der Schneidvorrichtung (3) längs der Kontur (5) um die geometrische Achse der Achse (6), dadurch gekennzeichnet, daß die Schneidvorrichtung (3) durch einen Pantographen P gehalten wird, der in einer zur Ebene der Zähne (2) parallelen Ebene beweglich ist und der einerseits einen ersten Hauptarm (9) aufweist, welcher mit einem Ende um die Achse (6) drehbar angeordnet ist, sowie einen zweiten Hauptarm (11), an dessen freiem Ende die Schneidvorrichtung (3) montiert ist, und der andererseits einen ersten Nebenarm (12) und einen zweiten Nebenarm (14) aufweist, die gemeinsam um eine Schwenkachse (17) verschwenkbar sind, welche fluchtend zur Achse (6) und zur Schneidvorrichtung (3) liegt, wobei die Schwenkachse (17) mit einer Rolle ausgestattet ist, die zumindest in die Führungsbahn (19) eingreift, und daß dabei die Führungsbahn verkleinert die Kontur (5) wiedergibt.

2. Gabelgerät nach Anspruch 1, dadurch gekennzeichnet, daß es eine Schneidvorrichtung (4) mit einem Messer aufweist, welches in seiner Ebene arbeitet, und daß ein mit dem Pantographen P kombiniertes Einstellparallelogramm durch einen Verschiebehebel (37) vervollständigt wird, daß die Schneidvorrichtung (3) am Ende des zweiten Hauptarms (11) mittels einer Einstellhalterung (39) befestigt ist, an der die Schneidvorrichtung befestigt ist und die bei (18) am Ende des zweiten Hauptarms (11) schwenkbar angeordnet ist, und daß ferner der Verschiebehebel (37) mit einem Ende ebenfalls schwenkbar mit der Einstellhalterung (39) zwecks Steuerung der Einstellung derselben verbunden ist.

3. Gabelgerät nach Anspruch 2, dadurch gekennzeichnet, daß das Parallelogramm als ersten Hauptstab den zweiten Nebenarm (14) des Pantographen P umfaßt, sowie einen zweiten Hauptstab (31), der parallel zu diesem Nebenarm (14) liegt, einen ersten Nebenstab (32), der um die Schwenkachse (17) der beiden Nebenarme (12, 14) des Pantographen P und mit dem zweiten Hauptstab (31) verschwenkbar ist, wobei eine Seite eines zwischen zwei Schwenkpunkten (16, 34) liegenden Verschiebedreiecks (35) einen dritten Schwenkpunkt (36) aufweist, an welchem das andere Ende des Verschiebehebels (37) befestigt ist, und die beiden Schwenkpunkte (16, 34) dem zweiten Hauptarm (11) mit dem zweiten Nebenarm (14) des Pantographen P bzw. dem Verschiebedreieck (35) mit dem zweiten Hauptstab (31) des Parallelogramms zugeordnet sind.

4. Gabelgerät nach einem der Ansprüche 1 bis 3, dadurch gekennzeichnet, daß es einen vom Rahmen (1) gehaltenen Verstellmotor (25) aufweist, der unmittelbar auf seiner Welle ein Ritzel (25A) trägt, daß eine vom Rahmen (1) gehaltene Platte mit lose drehbaren Ritzeln (25B) ausgestattet ist, um eine in Eingriff mit diesen Ritzeln (25B) und mit dem Ritzel (25A) des Motors (25) stehende Kette (25C) zu führen, und daß eine an der Kette befestigte Platte (20), die die Schwenkachse (17) trägt, eine Rolle aufweist, die in die Führungsbahn (19) eingreift.

5. Gabelgerät nach einem der Ansprüche 1 bis 3, dadurch gekennzeichnet, daß es einen in seiner Länge veränderbaren Arm aufweist der sich unter dem Pantographen P zwischen der Achse (6) und der Schneidvorrichtung (3) erstreckt, daß dieser Arm ein Haltearm (40) des Pantographen P ist, daß dieser Arm mit einem Ende an der Achse (6) befestigt ist und ferner mit seinem entgegengesetzten Ende am Ende des zweiten Hauptarms (11) des Pantographen P verbunden ist, auf welchem die Schneidvorrichtung (3) montiert ist, und daß die Verstelleinrichtungen auf diesen Haltearm (40) einwirken, um die Schneidvorrichtung (3) längs der Kontur (5) zu verschieben.

6. Gabelgerät nach Anspruch 3, dadurch gekennzeichnet, daß es einen in seiner Länge veränderbaren Arm aufweist, der sich zwischen der Achse (6) und der Schneidvorrichtung (3) erstreckt, und daß dieser Arm (40) an seinem freien Ende eine Buchse (44) aufweist, in welcher die Schwenkachse (18) der Einstellhalterung (39) geführt ist, welche die Schneidvorrichtung (3) und das Ende des zweiten Hauptarms (11) des Pantographen P trägt.

7. Gabelgerät nach Anspruch 6, dadurch gekennzeichnet, daß es eine Kraftübertragungshalterung (43) aufweist, die fest auf der Achse (6) zur Drehung mit dieser angeordnet ist und sich oberhalb des Pantographen P erstreckt und einen Motor (25) sowie eine Folge von Zahnrädern zur Bewegungsübertragung aufnimmt, die mit einem Ritzel (28) endet, und daß das Gabelgerät ferner eine vom Rahmen (1) getragene Platte mit einem kreisförmigen, eine Verzahnung tragenden Rand (26) aufweist, die auf der Längsachse der Achse (6) zentriert ist, wobei das letzte Ritzel (28) der Folge von Zahnrädern in den die Verzahnung tragenden Rand (26) eingreift.

8. Gabelgerät nach Anspruch 7, dadurch gekennzeichnet, daß ein vom Rahmen (1) getragenes Blechteil (23) die Platte mit dem die Verzahnung aufweisenden kreisförmigen Rand (26) darstellt und auf seiner Unterseite die Führungsbahn (19) bildet, die durch zwei parallele, im Abstand voneinander liegende Eisenelemente (24) dargestellt wird.

9. Gabelgerät nach Anspruch 8, dadurch gekennzeichnet, daß der Arm (40) einen ersten Abschnitt (42A) aufweist, der fest mit der Achse (6) zur Drehung mit dieser verbunden ist, sowie einen zweiten Abschnitt (42B), der im ersten Abschnitt (42A) liegt, und daß eine Längsnut (50) im oberen Bereich des ersten Abschnitts (42A) des Arms angeordnet ist, um den unteren Endabschnitt der Schwenkachse (17) des ersten Nebenarms (12) und des zweiten Nebenarms (14) des Pantographen P aufzunehmen.

10. Gabelgerät zur Gutentnahme aus einem Silo, welches parallele Zähne (2) aufweist, die längs einer rechtwinklig in der Anordnung verlaufenden Kontur (5) enden, eine senkrecht zur Ebene der Zähne (2) liegenden Achse (6), eine Schneidvorrichtung (3) mit einem Schneidelement (4), das längs der Kontur (5) verschiebbar ist, und die von einem in seiner Länge veränderbaren Haltearm (40) getragen wird, der sich parallel zur Ebene der Zähne (2) zwischen der Achse (6) und einer Einstellhalterung (39) erstreckt, an welcher die Schneidvorrichtung (3) befestigt ist, wobei eine Führungsbahn (19) die Form der Kontur (5) wiedergibt und Einrichtungen zur Verstellung derselben bezüglich der Achse (6) vorgesehen sind, dadurch gekennzeichnet, daß ein Pantograph P an einem Ende auf der Achse (6) befestigt und an seinem entgegengesetzten Ende auf der Einstellhalterung (39) schwenkbar angeordnet ist, daß dieser Pantograph P durch den Arm (40) in Drehung versetzt wird und in seinen Bewegungen während seiner Rotation durch mindestens eine Rolle gesteuert wird, die in die Führungsbahn (19) eingreift, und daß die Führungsbahn die Kontur (5) verkleinert wiedergibt, und daß ferner ein verschwenkbares Parallelogramm mit dem Pantographen P kombiniert ist und mit einem Verschiebehebel (37) endet, der bei (38) schwenkbar auf der Einstellhalterung (39) befestigt ist um die Schneidvorrichtung während ihrer Bewegung einzustellen.

11. Gabelgerät nach einem der Ansprüche 1 bis 10, dadurch gekennzeichnet, daß das Schneidelement (4) aus zwei Messern (4A, 4B) besteht, die zusammengefügt sind und in Längsrichtung im entgegengesetzten Sinn während des Betriebs bewegt werden.

12. Gabelgerät nach Anspruch 11, dadurch gekennzeichnet, daß jedes der beiden Messer (4A, 4B) mit einem von zwei gegenüberliegenden Exzentern (29, 30) verbunden ist, die durch einen Motor (31) angetrieben werden.

**Claims**

1. A fork for the removal of silage, comprising a frame (1) equipped with parallel teeth (2) which terminate as a whole along a rectangular contour (5), a shaft (6) supported perpendicularly to the plane of the teeth (2), a cutting apparatus (3) supported from the shaft (6) and having a cutting member (4) which can be moved along the contour (5), a guideway (19) reproducing the shape of the contour (5) and means of movement of the cutting apparatus (3) along the contour (5) about the geometrical axis of the shaft (6), characterized in that the cutting apparatus (3) is supported by a pantograph P which can move in a plane parallel with the plane of the teeth (2) and has firstly a first main leg (9) mounted by one end about the shaft (6) and a second main leg (11) at the free end of which is mounted the cutting apparatus (3), and secondly a first secondary leg (12) and a second secondary leg (14) hinged together about a hingepin (17) aligned with the shaft (6) and the cutting apparatus (3), the said hingepin being provided with at least one roller which engages with the guideway (19), and in that the guideway reproduces on a reduced scale the contour (5).

2. A fork as in claim 1, characterized in that it includes a cutting member (4) of the type having a blade which acts in its own plane, and a directing parallelogram combined with the pantograph P and completed by a link lever (37), the cutting apparatus (3) being mounted at the end of the second main leg (11) by means of a directing support (39) to which it is attached and which is hinged at (18) onto the end of this second leg (11), the link lever (37) being also hinged by one end onto this directing support (39) in order to control the direction.

3. A fork as in claim 2, characterized in that the parallelogram comprises as its first main bar the second secondary leg (14) of the pantograph P, a second main bar (31) parallel with this secondary leg (14), a first secondary bar (32) hinged about the hingepin (17) of the two secondary legs (12, 14) of the pantograph P and onto the second main bar (31), one side lying between two hingepoints (16, 34) of a link triangle (35) having a third hingepoint (36) to which is hinged the other end of the link lever (37), the said two hingepoints (16, 34) being respectively that of the second main leg (11) onto the second secondary leg (14) of the pantograph P and that of the link triangle (35) onto the second main bar (31) of the parallelogram.

4. A fork as in any one of the claim 1 to 3, characterized in that it comprises a driving motor (25) supported by the frame (1) and provided directly on its shaft with a sprocket (25A), a plate supported by the frame (1) and equipped with sprockets (25B) which are free to rotate in order to guide a chain (25C) which meshes with these sprockets (25B) and with the sprocket (25A) on the motor (25), and a small plate (20) attached to the said chain and carrying the hingepin (17) which is provided with a roller engaging with the guideway (19).

5. A fork as in any one of the claims 1 to 3, characterized in that it comprises an arm of variable length which extends below the pantograph P between the shaft (6) and the cutting apparatus (3), in that this arm is an arm (40) for support of the pantograph P, this arm being mounted by one end about the shaft (6) and joined by its opposite end to that end of the second main leg (11) of the pantograph P upon which is mounted the cutting apparatus (3), and in that the means of movement act upon this supporting arm (40) in order to move the cutting apparatus (3) along the contour (5).

6. A fork as in claim 3, characterized in that it comprises an arm of variable length which extends between the shaft (6) and the cutting apparatus (3), and in that this arm (40) exhibits at the free end of it a bush (44) in which is guided the hingepin (18) between the directing support (39) which carries the cutting apparatus (3), and the end of the second main leg (11) of the pantograph P.

7. A fork as in claim 6, characterized in that it includes a transmission support (43) which is keyed against rotation onto the shaft (6), extends above the pantograph P and carries a motor (25) and a gear train for transmission of motion, which terminates in a pinion (28), and in that it includes in addition a plate supported by the frame (1) and having a toothed circular edge (26) centred upon the axis of the shaft (6), the last pinion (28) of the train meshing with this toothed edge (26).

8. A fork as in claim 7, characterized in that a metal sheet (23) supported by the frame (1) forms the plate having the toothed circular edge (26) and exhibits on its lower face the guideway (19) defined by two parallel steel bands (24) with a gap between.

9. A fork as in claim 8, characterized in that the arm (40) comprises a first portion (42A) keyed against rotation onto the shaft (6) and a second portion (42B) mounted to slide in the first portion (42A) and in that a longitudinal groove (50) is provided on top of the first portion (42A) of the arm for receiving the extreme bottom portion of the hingepin (17) between the first secondary leg (12) and the second secondary leg (14) of the pantograph P.

10. A fork for the removal of silage, comprising parallel teeth (2) which terminate as a whole along a rectangular contour (5), a shaft (6) supported perpendicularly to the plane of the teeth (2), a cutting apparatus (3) having a cutting member (4) which can be moved along the contour (5), and supported by a supporting arm (40) of variable length which extends in parallel with the plane of the teeth (2) between the shaft (6) and a directing support (39) to which is attached the cutting apparatus (3), a guideway (19) which reproduces the shape of the contour (5) and means of movement of the cutting apparatus (3) about the shaft (6), characterized in that a pantograph P is mounted by one end onto the shaft (6) and hinged by its opposite end onto the directing support (39), this pantograph P being driven in rotation by the arm (40) and controlled in its motions during its rotation by at least one roller engaging in the guideway (19), in that the guideway reproduces on a reduced scale the contour (5), and in that a hinged parallelogram is combined with the pantograph P and terminates in a link lever (37) hinged at (38) onto the directing support (39) in order to direct the cutting apparatus (3) during its movement.

11. A fork as in any one of the claims 1 to 10, characterized in that the cutting member (4) is composed of two blades (4A, 4B) placed side by side and moved longitudinally in opposite directions during operation.

12. A fork as in claim 11, characterized in that the two blades (4A, 4B) are associated respectively with two opposed eccentrics (29, 30) driven in rotation by a motor (31).

*Fig.1*

Fig.2

0 041 445

**Fig:3**

**Fig:5**

15

Fig:4